# FASCICULE DE BREVET EUROPEEN

(11) **EP 3 381 197 B1**
(45) Date de publication et mention de la délivrance du brevet: **23.10.2019**
(21) Numéro de dépôt: 16809950.5
(22) Date de dépôt: 28.10.2016
(51) Int. Cl.: H04Q 9/00, G06F 11/00, G08C 25/00

(54) **PROCÉDÉ DE TRANSMISSION D'INFORMATIONS RELATIVES À UNE PANNE DANS UNE INSTALLATION ÉLECTRIQUE ET SERVEUR ASSOCIÉ**
VERFAHREN ZUR ÜBERTRAGUNG VON INFORMATIONEN IM ZUSAMMENHANG MIT EINER STÖRUNG IN EINER ELEKTRISCHEN ANLAGE UND ZUGEHÖRIGER SERVER
METHOD FOR TRANSMITTING INFORMATION RELATED TO A BREAKDOWN IN AN ELECTRICAL FACILITY, AND RELATED SERVER

(30) Priorité: 23.11.2015 FR 1561243
(43) Date de publication de la demande: 03.10.2018
(73) Titulaire: Legrand France, 87000 Limoges (FR); Legrand SNC, 87000 Limoges (FR)
(72) Inventeur: AMPILHAC, Christophe, 87220 Feytiat (FR)
(74) Mandataire: Jacobacci Coralis Harle
(86) Numéro de dépôt international: PCT/FR2016/052817
(87) Numéro de publication internationale: WO 2017/089669

(56) Documents cités:
- WO-A1-00/42587
- WO-A2-2008/054806

## Description

### DOMAINE TECHNIQUE AUQUEL SE RAPPORTE L'INVENTION

La présente invention concerne la communication à un utilisateur d'informations relatives à une panne dans une installation électrique.

Elle concerne plus particulièrement un procédé de transmission d'informations relatives à une panne dans une installation électrique, ainsi qu'un serveur associé.

### ARRIERE-PLAN TECHNOLOGIQUE

On connaît, par exemple du document EP 2 728 428, un système dans lequel des informations d'état de dispositifs industriels sont périodiquement transmises à une plateforme en ligne et dans lequel une notification par messagerie électronique est générée lorsqu'une installation industrielle n'est plus disponible.

Le document WO 00/42587 A1 décrit un système de surveillance à distance d'équipements électriques et/ou mécaniques. Les équipements transmettent périodiquement des messages indiquant un fonctionnement normal. L'absence de réception de ces messages périodiques génère un message d'erreur.

De telles solutions proposent d'avertir ainsi un utilisateur de la survenance d'un problème dans l'installation concernée.

### OBJET DE L'INVENTION

Dans ce contexte, la présente invention propose un procédé de transmission, par un serveur, d'informations relatives à une panne dans une installation électrique, dans lequel le serveur reçoit régulièrement des informations d'état d'au moins un dispositif électrique de l'installation électrique, caractérisé en ce qu'il comprend les étapes suivantes mises en oeuvre par le serveur :
- émission d'une information de survenance d'une panne à destination d'un utilisateur lorsque le serveur ne reçoit pas lesdites informations d'état pendant une durée déterminée ;
- postérieurement à ladite émission, réception de nouvelles informations d'état ;
- détermination, en fonction des nouvelles informations d'état, d'un type de la panne survenue ;
- émission de données désignant le type de la panne survenue à destination de l'utilisateur

L'utilisation d'informations reçues postérieurement à la survenance de la panne permet de donner des précisions sur la panne initialement survenue et de mieux informer l'utilisateur. En effet, la survenance de la panne étant détectée en l'absence d'informations, l'origine du problème ne peut en réalité pas être clairement identifiée au moment de l'émission de l'information de survenance de la panne.

D'autres caractéristiques avantageuses et non limitatives d'un tel procédé de transmission sont les suivantes :
- les informations d'état sont reçues en provenance d'un produit connecté (faisant par exemple partie de l'installation électrique) ;
- le produit connecté émet les informations d'état via un boîtier de connexion à un réseau public auquel est connecté le serveur ;
- le produit connecté est une passerelle ;
- la passerelle est en communication (au moyen d'une liaison filaire ou d'une liaison sans fil) avec ledit dispositif électrique ;
- la passerelle est en communication (au moyen d'une liaison filaire ou d'une liaison sans fil) avec un appareillage électrique de branchement dudit dispositif électrique à un réseau d'alimentation électrique ;
- le produit connecté est ledit dispositif électrique ;
- le produit connecté est un appareillage électrique de branchement dudit dispositif électrique à un réseau d'alimentation électrique.

Le procédé de transmission peut en outre comprendre les étapes suivantes :
- mémorisation de l'instant d'absence de réception des informations d'état ; et/ou
- mémorisation de l'instant de réception des nouvelles informations d'état.

Les données désignant le type de panne peuvent alors comprendre une indication basée sur l'instant d'absence mémorisé et/ou sur l'instant de réception mémorisé.

L'invention propose également un serveur conçu pour transmettre des informations relatives à une panne dans une installation électrique, comprenant :
- des moyens pour recevoir régulièrement des informations d'état d'au moins un dispositif électrique de l'installation électrique ;
- des moyens pour émettre une information de survenance d'une panne à destination d'un utilisateur lorsque le serveur ne reçoit pas lesdites informations d'état pendant une durée déterminée ;

- des moyens pour recevoir, postérieurement à ladite émission, de nouvelles informations d'état ;
- des moyens pour déterminer, en fonction des nouvelles informations d'état, un type de la panne survenue ;
- des moyens pour émettre des données désignant le type de la panne survenue à destination de l'utilisateur.

Lorsque le serveur est réalisé par une architecture à base de processeur, les moyens précités peuvent au moins en partie être réalisés par des instructions de programme d'ordinateur mémorisées au sein du serveur et exécutables par ce processeur ; de telles instructions peuvent mettre en oeuvre la fonction du moyen concerné lorsqu'elles sont exécutées par le processeur, en collaboration éventuellement avec des moyens matériels, tels que par exemple des circuits de communication.

### DESCRIPTION DETAILLEE D'EXEMPLES DE REALISATION

La description qui va suivre en regard des dessins annexés, donnés à titre d'exemples non limitatifs, fera bien comprendre en quoi consiste l'invention et comment elle peut être réalisée.

Sur les dessins annexés :
- la figure 1 représente schématiquement un premier exemple de système au sein duquel peut être mise en oeuvre l'invention ;
- la figure 2 représente schématiquement un second exemple d'un tel système ;
- la figure 3 représente schématiquement un appareillage conçu pour émettre des informations d'état d'un dispositif électrique ; et
- la figure 4 est un logigramme représentant un procédé mis en oeuvre au niveau d'un serveur distant.

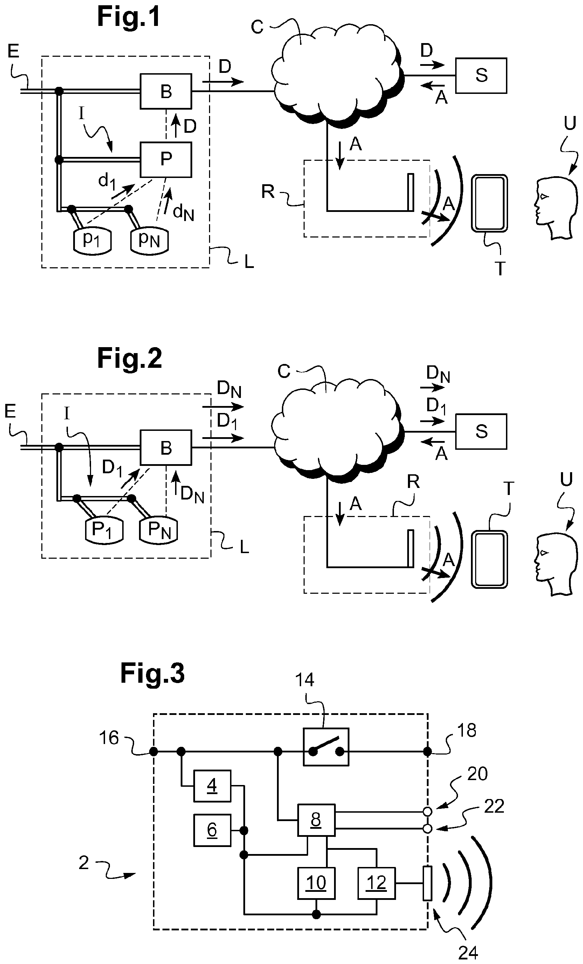

Les figures 1 et 2 représentent schématiquement deux exemples de système au sein duquel peut être mise en oeuvre l'invention.

Un tel système comprend une installation électrique I dans laquelle une pluralité de dispositifs électriques p₁, p_{N}, P₁, P_{N} sont alimentés électriquement par un réseau électrique E.

Cette installation électrique I est située dans un local L, tel qu'une habitation. En variante, ce local pourrait avoir un autre usage, par exemple un usage professionnel. Il pourrait s'agir par exemple d'une partie au moins d'un bâtiment industriel.

Un boîtier de connexion B à un réseau public C (tel que le réseau Internet) est également présent dans le local L. Ce boîtier de connexion B est également alimenté électriquement par le réseau électrique E et fait donc partie lui aussi de l'installation électrique I.

Le local L renferme également au moins un produit connecté P, P₁, P_{N} conçu pour émettre, via le boîtier de connexion B, des informations d'état D, D₁, D_{N} d'au moins un dispositif électrique p₁, p_{N}, P₁, P_{N} à destination d'un serveur distant S connecté au réseau public C. Ce produit connecté P, P₁, P_{N} est pour ce faire relié au boîtier de connexion B au moyen d'une liaison filaire (par exemple de type Ethernet) ou d'une liaison sans fil (par exemple au sein d'un réseau local sans fil).

Comme cela sera expliqué plus loin, chaque produit connecté P, P₁, P_{N} émet régulièrement les informations d'état D, D₁, D_{N}, sous forme d'une trame de vie, à destination du serveur distant S afin de confirmer auprès du serveur S le bon fonctionnement continu du (ou des) dispositif(s) électrique(s) concerné(s) p₁, p_{N}, P₁, P_{N}.

Dans le mode de réalisation de la figure 1, le produit connecté P est une passerelle conçue pour recevoir des informations d'état d₁, d_{N} de chacun des dispositifs électriques p₁, p_{N} et pour transmettre ces informations d'état regroupées D (par exemple au sein d'un rapport d'état) à destination du serveur distant S comme déjà indiqué.

Une telle passerelle P, également située dans le local L, est alimentée par le réseau électrique E et fait donc partie de l'installation électrique I.

La passerelle P est par exemple reliée à chacun des dispositifs électriques p₁, p_{N} au moyen d'une liaison sans fil, ici de type ZigBee, sur laquelle sont notamment transmises les informations d'état d₁, d_{N} du dispositif électrique concerné p₁, p_{N}. La passerelle P est ainsi en communication avec chacun des dispositifs électriques p₁, p_{N}.

Dans le mode de réalisation de la figure 2, chacun des dispositifs électriques P₁, P_{N} forme un produit connecté capable d'émettre les informations d'état D₁, D_{N} le concernant à destination du serveur distant S.

Dans les modes de réalisation des figures 1 et 2, chaque dispositif électrique p₁, p_{N}, P₁, P_{N} comprend par exemple un circuit de mesure de la tension d'alimentation du dispositif électrique concerné p₁, p_{N}, P₁, P_{N} et un circuit de mesure du courant consommé par le dispositif électrique concerné p₁, p_{N}, P₁, P_{N}. Un tel dispositif électrique p₁, p_{N}, P₁, P_{N} génère, sur la base notamment de la tension et du courant mesurés, les informations d'état d₁, d_{N}, D₁, D_{N} du dispositif électrique concerné p₁, p_{N}, P₁, P_{N}. Ces informations d'état d₁, d_{N}, D₁, D_{N} sont par exemple indicatives du bon fonctionnement du dispositif électrique p₁, p_{N}, P₁, P_{N} ou indiquent au contraire un défaut de fonctionnement du dispositif électrique p₁, p_{N}, P₁, P_{N} (les informations d'état pouvant alors désigner la nature du défaut détecté).

En variante, les mesures indiquées ci-dessus, la génération des informations d'état d₁, d_{N}, D₁, D_{N} et l'émission de ces informations d'état d₁, d_{N}, D₁, D_{N} pourraient être réalisées au niveau d'un appareillage électrique (par exemple une prise électrique) assurant le branchement électrique (ou connexion électrique) du dispositif électrique concerné p₁, p_{N}, P₁, P_{N} au réseau électrique E. Un exemple d'un tel appareillage électrique est décrit ci-dessous en référence à la figure 3.

Comme cela sera expliqué plus en détail dans la suite, le serveur distant S est conçu pour recevoir les informations d'état D, D₁, D_{N} émises par le produit connecté P, P₁, P_{N} situé dans le local L, pour analyser ces informations d'état D, D₁, D_{N} et pour émettre éventuellement un message d'alerte A destiné à un utilisateur U (qui est typiquement un usager du local L).

Un tel message d'alerte A est par exemple émis à destination d'un terminal T de l'utilisateur U. Le terminal T est ici un téléphone cellulaire et le message d'alerte A peut ainsi être un message électronique transmis du serveur distant S au terminal T, via le réseau public C et un réseau de téléphonie mobile R auquel peut se connecter le terminal T. En variante, le message d'alerte A pourrait par exemple être transmis par un système de minimessage (ou SMS pour "*Short Message System*").

La figure 3 représente schématiquement un appareillage 2 conçu pour émettre des informations d'état d'un dispositif électrique.

Comme déjà mentionné en tant que variante des systèmes représentés aux figures 1 et 2, un tel appareillage 2 permet de brancher (ou connecter) électriquement un tel dispositif électrique à un réseau électrique, de mesurer des signaux caractéristiques du dispositif électrique, de générer des informations d'état du dispositif électrique sur la base des signaux mesurés et d'émettre ces informations d'état à destination d'un serveur distant (via un boîtier de connexion à un réseau public, ainsi qu'éventuellement via une passerelle).

L'appareillage 2 comprend un circuit d'alimentation 4 relié à une borne d'entrée 16 destinée à être connecté à un réseau d'alimentation électrique (par exemple à une borne de phase).

La bornée d'entrée 16 est reliée à une borne de sortie 18 par l'intermédiaire d'un interrupteur commandé 14. La borne de sortie 18 est destinée à être connectée au dispositif électrique à alimenter.

Par mesure de simplification, on a représenté une seule borne d'entrée 16 et une seule borne de sortie 18, mais l'appareillage 2 comprend au moins une autre borne d'entrée (pour connexion à une borne de neutre) et une autre borne de sortie (reliée à l'autre borne d'entrée) pour le retour du courant.

Le circuit d'alimentation 4 alimente un processeur 8, une mémoire 10 et un circuit de communication 12.

L'appareillage 2 comprend également un moyen de stockage d'énergie électrique 6 (ici un condensateur dit "*réservoir*") capable d'assurer l'alimentation des circuits susmentionnées 8, 10, 12 (en lieu et place du circuit d'alimentation 4) pendant une durée prédéterminée (comprise par exemple entre 1 s et 10 s, ici 5 s) lorsque le réseau électrique est défaillant (i.e. ne délivre plus de tension).

Le circuit de communication 12 est par exemple couplé à une antenne 24 de manière à émettre des données via une liaison sans fil établie avec un dispositif extérieur (tel que la passerelle P dans le cas de la figure 1 et le boîtier de connexion B dans le cas de la figure 2).

La mémoire 10 est par exemple une mémoire non-volatile réinscriptible. Cette mémoire 10 mémorise notamment des instructions de programme d'ordinateur qui permettent, lorsqu'elles sont exécutées par le processeur 8, la mise en oeuvre de certaines fonctionnalités par le processeur 8, notamment celles décrites ci-après.

En particulier, du fait de l'exécution d'instructions correspondantes, le processeur 8 peut mesurer la tension présente au niveau de la borne d'entrée 16 et le courant délivré au dispositif électrique, peut déterminer, sur la base des mesures effectuées, des informations d'état du dispositif électrique et peut émettre, en envoyant des commandes correspondantes au circuit de communication 12, ces informations d'état à destination d'une passerelle (telle que la passerelle P de la figure 1) ou d'un serveur distant (tel que le serveur distant S de la figure 2).

Lorsque le processeur 8 détecte un fonctionnement normal (auquel cas les informations d'état déterminées et émises sont indicatives de bon fonctionnement), le processeur 8 active par exemple un indicateur de bon fonctionnement 20 (réalisé par exemple en pratique au moyen d'une source de lumière, telle qu'une diode électroluminescente, de couleur verte).

Lorsque le processeur 8 détecte un fonctionnement anormal (auquel cas les informations d'état déterminées et émises sont indicatives d'un défaut de fonctionnement), le processeur 8 active par exemple un indicateur de défaut 22 (réalisé par exemple en pratique au moyen d'une source de lumière, telle qu'une diode électroluminescente, de couleur rouge).

Le processeur 8 peut en outre commander l'ouverture de l'interrupteur commandé 14 en cas de détection d'une surtension ou d'une surintensité.

On prévoit ici en outre que, lorsque le processeur 8 redémarre après une perte d'alimentation (situation usuellement dénommée *"démarrage à froid*"), il provoque l'émission par le circuit de communication 12 d'une trame dédiée, c'est-à-dire d'informations d'état indicatives du démarrage à froid.

Une telle perte d'alimentation est due non seulement à la défaillance du réseau électrique, mais également à la consommation de toute l'énergie électrique stockée dans le moyen de stockage 6.

Le processeur 8 peut alors éventuellement attendre la réception (par le circuit de communication 12) d'un accusé de réception en provenance du dispositif destinataire de la trame dédiée (c'est-à-dire, comme indiqué ci-dessus, la passerelle P dans le cas de la figure 1 et le serveur distant S dans le cas de la figure 2), avant de débuter la communication régulière (par exemple périodique) des trames de vie contenant les informations d'état susmentionnées à ce même dispositif destinataire.

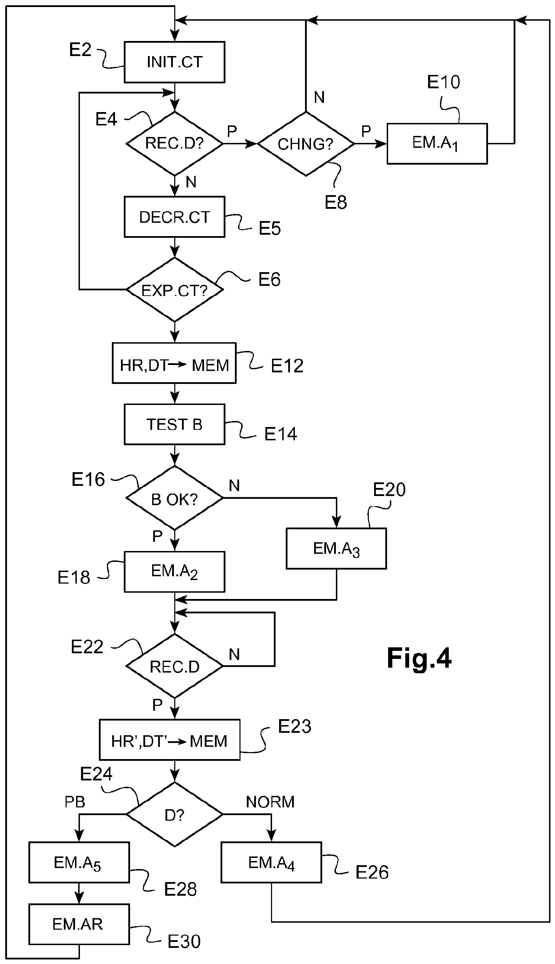

La figure 4 est un logigramme représentant un procédé mis en oeuvre au niveau du serveur distant S pour la surveillance d'un au moins des dispositifs électriques précités p₁, p_{N}, P₁, P_{N} grâce aux informations d'état D, D₁, D_{N} reçues d'un produit connecté P, P₁, P_{N}. Un tel procédé peut être mis en oeuvre au sein du serveur distant S pour chaque produit connecté.

Ce procédé est décrit à partir d'une étape E2 où le dispositif surveillé p₁, p_{N}, P₁, P_{N} est en fonctionnement normal et le produit connecté P, P₁, P_{N} émet donc régulièrement (par exemple périodiquement) des trames de vie contenant une information d'état indicative de bon fonctionnement.

Un compteur CT est initialisé au sein du serveur distant S à l'étape E2. Le compteur CT est initialisé avec une valeur correspondant à une durée maximum déterminée séparant la réception de deux trames de vie en fonctionnement normal.

Le serveur S détermine à l'étape E4 si une trame de vie contenant les informations d'état D, D₁, D_{N} du dispositif a été reçue en provenance du produit connecté P, P₁, P_{N} associé au(x) dispositif(s) surveillé(s) p₁, p_{N}, P₁, P_{N}.

Dans l'affirmative, le procédé se poursuit à l'étape E8 décrite plus loin.

Dans la négative, le compteur CT est décrémenté (étape E5) et le serveur S détermine à l'étape E6 si le compteur CT a expiré.

Dans l'affirmative, cela signifie qu'aucune trame de vie n'a été reçue dans une période de temps correspondant à la durée maximum précitée et le procédé se poursuit à l'étape E12 décrite plus loin pour le traitement de cette anomalie.

Dans la négative, le procédé boucle à l'étape E4 décrite ci-dessus pour tester la réception d'une trame de vie.

Dans le cas où une trame de vie est reçue à l'étape E4, le procédé se poursuit comme déjà indiqué à l'étape E8 à laquelle le serveur détermine si un changement s'est produit dans les informations d'état reçues D, D₁, D_{N}.

Dans la négative, le procédé boucle à l'étape E2 dans l'attente d'une nouvelle trame de vie. En effet, si des informations d'état D, D₁, D_{N} sont indicatives d'un défaut mais ont déjà été détectées à leur apparition lors d'un précédent passage à l'étape E8, il est inutile d'en informer à nouveau l'utilisateur U.

Dans l'affirmative (c'est-à-dire lorsqu'un changement d'état s'est produit dans le ou les dispositif(s) surveillé(s) p₁, p_{N}, P₁, P_{N}), le serveur S procède à l'étape E10 à l'émission d'un message d'alerte A₁ à destination de l'utilisateur U (ici du terminal T) afin de l'informer du nouvel état détecté.

Le nouvel état est par exemple un état de défaut d'un dispositif électrique surveillé p₁, p_{N}, P₁, P_{N}, indiqué par les informations d'état reçue D, D₁, D_{N} à l'étape E4. Le message d'alerte A₁ contient alors une indication du dispositif électrique p₁, p_{N}, P₁, P_{N} en défaut, ainsi qu'éventuellement le type de défaut (tel qu'identifié éventuellement dans les informations d'état reçues D, D₁, D_{N}).

Selon une variante envisageable, le message d'alerte A₁ pourrait ne pas être envoyé dès la détection d'un changement d'état, mais seulement si ce changement d'état est confirmé pendant une durée donnée (par la réception ultérieure d'autres trames de vie confirmant ce changement d'état), ce qui évite d'alerter l'utilisateur pour des défauts de courte durée n'ayant pas de conséquence notable. La durée donnée susmentionnée est par exemple comprise entre 5 minutes et 2 heures, et vaut ici 20 minutes.

On remarque que, lors d'un passage ultérieur à l'étape E8, le changement détecté pourrait être un retour à la normal du fonctionnement du dispositif électrique précédemment en défaut (les informations d'état étant indicatives de bon fonctionnement pour ce dispositif électrique). Le message d'alerte A₁ émis contiendra alors une indication du dispositif électrique concerné et une indication de bon fonctionnement de ce dispositif.

Après l'émission du message A₁ à l'étape E10, le procédé boucle à l'étape E2 pour attente d'une nouvelle trame de vie.

On décrit maintenant le processus mis en oeuvre lorsque le compteur CT a expiré à l'étape E6, comme déjà indiqué, sans réception d'une trame de vie.

Le serveur S mémorise à l'étape E12 l'instant de détection de l'absence de réponse (c'est-à-dire en pratique l'heure HR et la date DT courante).

Le serveur S peut alors éventuellement effectuer à l'étape E14 un test de la connexion entre le serveur S et le boîtier de connexion B (par exemple au moyen d'une commande de type "*ping*" adressée du serveur S au boîtier de connexion B).

Le serveur S peut ainsi déterminer à l'étape E16 si la connexion précitée est fonctionnelle (ici en cas de réception d'une réponse à la commande "*ping*" en provenance du boîtier de connexion B).

Dans l'affirmative, le serveur S procède à l'étape E18 à l'émission d'un message d'alerte A₂ à destination de l'utilisateur U (ici du terminal T) indiquant la survenance d'un défaut indéfini au sein du local L ou de l'installation électrique I. L'absence d'émission de trame par le produit connecté concerné P, P₁, P_{N} peut en effet avoir diverses origines, par exemple la perte de connectivité entre le produit concerné P, P₁, P_{N} et le boîtier de connexion B ou un défaut d'alimentation du produit concerné P, P₁, P_{N} (qui n'affecte pas en revanche le boîtier de connexion B).

Dans la négative à l'étape E16, le serveur S procède à l'étape E20 à l'émission d'un message d'alerte A₃ à destination de l'utilisateur U (ici du terminal T) indiquant l'indisponibilité du boîtier de connexion B.

Dans les deux cas, le procédé se poursuit à l'étape E22 dans l'attente de la réception d'une nouvelle trame de données (correspondant à des informations d'état) en provenance du produit connecté P, P₁, P_{N}.

En l'absence d'une telle réception, le procédé boucle à l'étape E22 tant qu'une nouvelle trame n'est pas reçue.

Lorsque de nouvelles informations d'état sont reçues par le serveur S en provenance du produit connecté P, P₁, P_{N}, le procédé se poursuit à l'étape E23 à laquelle l'instant de réception de ces nouvelles données (c'est-à-dire en pratique l'heure HR' et la date DT' courante) est mémorisé au sein du serveur S.

Le serveur S détermine alors à l'étape E24 si les nouvelles informations d'état reçues correspondent à une trame de vie contenant des informations d'état D, D₁, D_{N} (comme celles régulièrement envoyées) ou à une trame indicative d'un démarrage à froid du produit connecté P, P₁, P_{N} (ce qui indique que celui-ci avait précédemment subi un défaut d'alimentation).

Si les nouvelles informations d'état reçues correspondent à une trame de vie, le procédé se poursuit à l'étape E26 à laquelle le serveur S procède à l'émission d'un message A₄ à destination de l'utilisateur U (ici du terminal T) indiquant que le problème signalé par le message A₂ ou A₃ était probablement un problème de transmission. On considère en effet dans ce cas que le produit connecté P, P₁, P_{N} a fonctionné correctement mais que les trames de vie qu'il a envoyées n'ont pas été correctement transmises. Le message A₄ peut en outre inclure une indication de l'instant de détection de l'absence de réponse et/ou une indication de l'instant de réception des nouvelles données et/ou une indication de la durée séparant ces deux instants.

Le procédé boucle alors à l'étape E2 pour la poursuite du fonctionnement normal.

Si les nouvelles informations d'état reçues indiquent qu'un démarrage à froid du produit connecté P, P₁, P_{N} vient d'avoir lieu, on considère que l'absence d'émission de trames de vie provient du défaut d'alimentation du produit connecté P, P₁, P_{N} et le procédé se poursuit à l'étape E28 à laquelle le serveur S procède à l'émission d'un message A₅ à destination de l'utilisateur U (ici du terminal T) indiquant que le problème signalé par le message A₂ ou A₃ était probablement un problème d'alimentation électrique.

Le message A₅ peut éventuellement être complété par des éléments déterminés en fonction du résultat de l'étape E16. Par exemple, si une réponse a été reçue du boîtier de connexion B lors du test de l'étape E14, le message A₅ peut indiquer que le problème d'alimentation électrique était localisé. Si en revanche aucune réponse n'a été reçue du boîtier de connexion B lors du test de l'étape E14, le message A₅ peut indiquer que le problème d'alimentation électrique était général.

Le message A₅ peut en outre inclure une indication de l'instant de détection de l'absence de réponse et/ou une indication de l'instant de réception des nouvelles données et/ou une indication de la durée séparant ces deux instants.

Le serveur S peut en outre émettre alors un accusé de réception des informations d'état indicatives de démarrage à froid (étape E30), ce qui initiera au niveau du produit connecté concerné P, P₁, P_{N} l'émission régulière des trames de vie. Le procédé peut ainsi boucler à l'étape E2 pour la poursuite du fonctionnement normal.

## Revendications

1. Procédé de transmission, par un serveur (S), d'informations relatives à une panne dans une installation électrique (I), dans lequel le serveur (S) reçoit régulièrement des informations d'état (D, D₁, D_{N}) d'au moins un dispositif électrique (p₁, p_{N}, P₁, P_{N}) de l'installation électrique (I), comprenant les étapes suivantes mises en oeuvre par le serveur (S) :
- émission (E18 ; E20) d'une information (A₂ ; A₃) de survenance d'une panne à destination d'un utilisateur (U) lorsque le serveur (S) ne reçoit pas lesdites informations d'état (D, D₁, D_{N}) pendant une durée déterminée **caractérisé en ce qu'**il comprend les étapes supplémentaires suivantes:
- postérieurement à ladite émission (E18 ; E20), réception (E22) de nouvelles informations d'état (D, D₁, D_{N}) ;
- détermination (E24), en fonction des nouvelles informations d'état (D, D₁, D_{N}), d'un type de la panne survenue ;
- émission (E26 ; E28) de données (A₄ ; A₅) désignant le type de la panne survenue à destination de l'utilisateur (U).

2. Procédé de transmission selon la revendication 1, dans lequel les informations d'état (D, D₁, D_{N}) sont reçues en provenance d'un produit connecté (P ; P₁ ; P_{N} ; 2).

3. Procédé de transmission selon la revendication 2, dans lequel le produit connecté (P ; P₁ ; P_{N} ; 2) émet les informations d'état (D, D₁, D_{N}) via un boîtier de connexion (B) à un réseau public (C) auquel est connecté le serveur (S).

4. Procédé de transmission selon la revendication 2 ou 3, dans lequel le produit connecté est une passerelle (P).

5. Procédé de transmission selon la revendication 4, dans lequel la passerelle (P) est en communication avec ledit dispositif électrique (p₁ ; p_{N}).

6. Procédé de transmission selon la revendication 4, dans lequel la passerelle (P) est en communication avec un appareillage électrique (2) de branchement dudit dispositif électrique (p₁ ; p_{N}) à un réseau d'alimentation électrique (E).

7. Procédé de transmission selon la revendication 2 ou 3, dans lequel le produit connecté est ledit dispositif électrique (P₁ ; P_{N}).

8. Procédé de transmission selon la revendication 2 ou 3, dans lequel le produit connecté est un appareillage électrique (2) de branchement dudit dispositif électrique à un réseau d'alimentation électrique (E).

9. Procédé de transmission selon l'une des revendications 1 à 8, comprenant les étapes suivantes :
- mémorisation (E12) de l'instant d'absence de réception des informations d'état (D, D₁, D_{N}) ;
- mémorisation (E23) de l'instant de réception des nouvelles informations d'état (D, D₁, D_{N}),
et dans lequel les données désignant le type de panne comprennent une indication basée sur l'instant d'absence mémorisé ou sur l'instant de réception mémorisé.

10. Serveur (S) conçu pour transmettre des informations relatives à une panne dans une installation électrique, comprenant :
- des moyens pour recevoir régulièrement des informations d'état (D, D₁, D_{N}) d'au moins un dispositif électrique (p₁, p_{N}, P₁, P_{N}) de l'installation électrique (I) ;
- des moyens pour émettre une information (A₂ ; A₃) de survenance d'une panne à destination d'un utilisateur (U) lorsque le serveur (S) ne reçoit pas lesdites informations d'état (D, D₁, D_{N}) pendant une durée déterminée **caractérisé en ce qu'**il comprend également:
- des moyens pour recevoir, postérieurement à ladite émission, de nouvelles informations d'état (D, D₁, D_{N}) ;
- des moyens pour déterminer, en fonction des nouvelles informations d'état (D, D₁, D_{N}), un type de la panne survenue ;
- des moyens pour émettre des données (A₄ ; A₅) désignant le type de la panne survenue à destination de l'utilisateur (U).

## Patentansprüche

1. Verfahren zur Übertragung durch einen Server (S) von Informationen im Zusammenhang mit einer Störung in einer elektrischen Anlage (I), bei dem der Server (S) regelmäßig Zustandsinformationen (D, D₁, D_{N}) wenigstens einer elektrischen Vorrichtung (p₁, p_{N}, P₁, P_{N}) der elektrischen Anlage (I) erhält und das die folgenden durch den Server (S) ausgeführten Schritte aufweist:
- Absenden (E18; E20) einer Information (A₂; A₃) bezüglich des Auftretens einer Störung an einen Benutzer (U), wenn der Server (S) während einer bestimmten Dauer die Zustandsinformationen (D, D₁, D_{N}) nicht erhält,
**dadurch gekennzeichnet, daß** es die folgenden zusätzlichen Schritte aufweist:
- nach dem Absenden (E18; E20), Empfangen neuer Zustandsinformationen (D, D₁, D_{N}),
- Bestimmen (E24) eines Typs der aufgetretenen Störung in Abhängigkeit von den neuen Zustandsinformationen (D, D₁, D_{N}),
- Absenden (E26; E28) von Daten (A₄, A₅), die den Typ der aufgetretenen Störung kennzeichnen, an den Benutzer (U).

2. Verfahren zur Übertragung gemäß Anspruch 1, bei dem die Zustandsinformationen (D, D₁, D_{N}) von einem angeschlossenen Produkt (P; P₁; P_{N}; 2) kommend empfangen werden.

3. Verfahren zur Übertragung gemäß Anspruch 2, bei dem das angeschlossene Produkt (P; P₁; P_{N}; 2) die Zustandsinformationen (D, D₁, D_{N}) über eine Verbindungsdose (B) an ein öffentliches Netz (C) abgibt, an das der Server (S) angeschlossen ist.

4. Verfahren zur Übertragung gemäß Anspruch 2 oder 3, bei dem das angeschlossene Produkt eine Brücke (P) ist.

5. Verfahren zur Übertragung gemäß Anspruch 4, bei dem die Brücke (P) mit der elektrischen Vorrichtung (p₁, p_{N}) kommuniziert.

6. Verfahren zur Übertragung gemäß Anspruch 4, bei dem die Brücke (P) mit einem elektrischen Gerät (2) zum Anschließen der elektrischen Vorrichtung (p₁, p_{N},) an ein elektrisches Versorgungsetz (E) kommuniziert.

7. Verfahren zur Übertragung gemäß Anspruch 2 oder 3, bei dem das angeschlossene Produkt die elektrische Vorrichtung (P₁, P₂) ist.

8. Verfahren zur Übertragung gemäß Anspruch 2 oder 3, bei dem das angeschlossene Produkt ein elektrisches Gerät (2) zum Anschließen der elektrischen Vorrichtung (p₁, p_{N},) an ein elektrisches Versorgungsetz (E) ist.

9. Verfahren zur Übertragung gemäß einem der Ansprüche 1 bis 8, das die folgenden Schritte aufweist:
- Einspeichern (E12) des Zeitpunkts des Fehlens des Empfangs der Zustandsinformationen (D, D₁, D_{N}),
- Einspeichern (E23) des Zeitpunkts des Empfangs der neuen Zustandsinformationen (D, D₁, D_{N}),
und bei dem die Daten, die den Typ der Störung kennzeichnen, eine Angabe aufweisen, die auf dem eingespeicherten Zeitpunkt des Fehlens oder dem eingespeicherten Zeitpunkt des Empfangs basiert.

10. Server (S), der dazu ausgelegt ist, Informationen über eine Störung in einer elektrischen Anlage zu übertragen, mit
- Mitteln zum regelmäßigen Empfangen von Zustandsinformationen (D, D₁, D_{N}) wenigstens einer elektrischen Vorrichtung (p₁, p_{N}, P₁, P_{N}) der elektrischen Anlage (I),
- Mitteln zum Absenden einer Information (A₂; A₃) bezüglich des Auftretens einer Störung an einen Benutzer (U), wenn der Server (S) während einer bestimmten Dauer die Zustandsinformationen (D, D₁, D_{N}) nicht erhält,
**dadurch gekennzeichnet, daß** er außerdem:
- Mittel zum Empfangen, nach dem besagten Absenden, neuer Zustandsinformationen (D, D₁, D_{N}),
- Mittel zum Bestimmen eines Typs der aufgetretenen Störung in Abhängigkeit von den neuen Zustandsinformationen (D, D₁, D_{N}),
- Mittel zum Absenden von Daten (A₄, A₅), die den Typ der aufgetretenen Störung kennzeichnen, an den Benutzer (U),
aufweist.

## Claims

1. A transmission method using a server (S) for transmitting information relating to a fault in an electrical installation (I), wherein the server (S) regularly receives status information (D, D₁, D_{N}) relating to at least one electrical device (p₁, p_{N}, P₁, P_{N}) of the electrical installation (I), the transmission method comprising the following steps implemented by the server (S) :
• when the server (S) does not receive said status information (D, D₁, D_{N}) during a determined time period, emitting (E18; E20) to a user (U) information (A₂; A₃) that a fault has occurred;
**characterised in that** it comprises the following additional steps:
• after said emission (E18; E20), receiving (E22) new status information (D, D₁, D_{N});
• as a function of the new status information (D, D₁, D_{N}), determining (E24) a type for the fault that has occurred; and
• emitting (E26; E28) to the user (U) data (A₄; A₅) specifying the type of the fault that has occurred.

2. A transmission method according to claim 1, wherein the status information (D, D₁, D_{N}) is received from a connected product (P; P₁; P_{N}; 2).

3. A transmission method according to claim 2, wherein the connected product (P; P₁; P_{N}; 2) emits the status information (D, D₁, D_{N}) via a connection box (B) to a public network (C) to which the server (S) is connected.

4. A transmission method according to claim 2 or claim 3, wherein the connected product is a gateway (P).

5. A transmission method according to claim 4, wherein the gateway (P) is in communication with said electrical device (p₁; p_{N}).

6. A transmission method according to claim 4, wherein the gateway (P) is in communication with an electrical accessory (2) for connecting said electrical device (p₁; p_{N}) to an electricity power supply network (E).

7. A transmission method according to claim 2 or claim 3, wherein the connected product is said electrical device (P₁; P_{N}).

8. A transmission method according to claim 2 or claim 3, wherein the connected product is an electrical accessory (2) for connecting said electrical device to an electricity power supply network (E).

9. A transmission method according to any one of claims 1 to 8, comprising the following steps:
• storing (E12) the instant of absence at which reception of status information (D, D₁, D_{N}) was absent;
• storing (E23) the instant of reception at which new status information (D, D₁, D_{N}) was received; and
and wherein the data specifying the type of fault includes an indication based on the stored instant of absence or on the stored instant of reception.

10. A server (S) designed to transmit information relating to a fault in an electrical installation, the server comprising:
• means for regularly receiving status information (D, D₁, D_{N}) relating to at least one electrical device (p₁, p_{N}, P₁, P_{N}) of the electrical installation (I);
• means for emitting to a user (U) information (A₂; A₃) that a fault has occurred, when the server (S) does not receive said status information (D, D₁, D_{N}) during a determined time period;
**characterised in that** it also comprises:
• means for receiving new status information (D, D₁, D_{N}) after said emission;
• means for determining, as a function of the new status information (D, D₁, D_{N}), a type for the fault that has occurred;
• means for emitting to the user (U) data (A₄; A₅) specifying the type of the fault that has occurred.
